# EUROPEAN PATENT APPLICATION

(11) **EP 4 683 180 A1**
(43) Date of publication of application: **21.01.2026**
(21) Application number: 24188897.3
(22) Date of filing: 16.07.2024
(51) Int. Cl.: H02K 5/173, H02K 7/00, H02K 7/08, H02K 7/116, B60K 7/00

(54) **ELECTRIC MOTOR, ASSOCIATED DRIVE UNIT AND ASSOCIATED ELECTRIC VEHICLE**

(71) Applicant: VOLVO TRUCK CORPORATION, 405 08 Göteborg (SE)
(72) Inventor: BARILLOT, Thomas, 69440 MORNANT (FR); TERRAT, Jean, 42520 MALLEVAL (FR)
(74) Representative: Lavoix

(57) **Abstract**

An electric motor (20) comprises a housing (40), a stator (50), a rotor (52) with a rotor shaft (56), an output shaft (64) fixedly secured with the rotor shaft by interference fit and driven in rotation by the rotor shaft, and a gear (66), integral with the output shaft. The electric motor is configured so that axial loads exerted on the gear are transmitted to the rotor shaft via the output shaft. The rotor shaft is mounted with the housing via a first rolling bearing assembly (70) and a second bearing assembly (72) located on either sides of the stator, among which one transmits radial loads exerted on the rotor shaft to the housing and the other transmits radial loads and axial loads exerted on the rotor shaft to the housing.

## Description

### TECHNICAL FIELD

The disclosure relates generally to electric motors and more precisely to electro mobility applied to vehicles. In particular aspects, the disclosure relates to an electric motor, to an associated drive unit and to an associated electric vehicle. The disclosure can be applied to heavy-duty vehicles, such as trucks, buses, and construction equipment, and also to other vehicles, such as automobiles, among other vehicle types. Although the disclosure may be described with respect to a particular vehicle, the disclosure is not restricted to any particular vehicle.

### BACKGROUND

To decrease environmental impacts of heavy-duty vehicles, transport industry is moving towards electro mobility to replace internal combustion engines by electric motors. Traditionally, the electric motor is positioned in the same place as the internal combustion engine it replaces, i.e. under the truck cab, and uses the same transmission.

However, positioning one or more electric motors as close as possible to the wheels, directly on their axle, is advantageous. Such configuration is known as electric axle, or "E-axle", configuration and improves performance of the vehicle, by reducing losses in the transmission. In addition, such configuration is more compact, freeing up space available for batteries.

One of the challenges for such configuration is to make the electric axle as compact as possible, so as not to interfere with other vehicle features, such as the suspension or braking system. Another challenge is ensuring the electric motor can be easily assembled and maintained, to decrease operating costs of the vehicle. The invention aims to provide a particularly compact and easy-to-maintain electric motor.

### SUMMARY

According to a first aspect of the disclosure, an electric motor, for an electric vehicle, comprises:
- a housing,
- a stator, mounted inside of the housing and extending along a main axis,
- a rotor comprising a rotor shaft, the rotor being mounted inside of the housing and coaxially mounted inside of the stator, the rotor shaft comprising:
   ∘ a central portion, aligned with the stator along the main axis,
   ∘ a first lateral portion, offset from the stator along the main axis and located on a first side of the stator, along the main axis, and
   ∘ a second lateral portion, offset from the stator along the main axis and located on a second side of the stator opposed to the first side, along the main axis,
- an output shaft, coaxially mounted inside the rotor shaft, the output shaft having an inner end and an outer end, the output shaft being fixedly secured with the second lateral portion of the rotor shaft by interference fit of the inner end with the rotor shaft, the output shaft being configured to be driven in rotation around the main axis by the rotor shaft when the electric motor is powered,
- a gear, integral with the output shaft, the electric motor being configured so that axial loads exerted on the gear, along the main axis, are transmitted to the rotor shaft via the output shaft,
- a first rolling bearing assembly, the first lateral portion of the rotor shaft being mounted with the housing via the first rolling bearing assembly, the first rolling bearing assembly being located on the first side of the stator, along the main axis, and
- a second rolling bearing assembly, the second lateral portion of the rotor shaft being mounted with the housing via the second rolling bearing assembly, the second rolling bearing assembly being located on the second side of the stator, along the main axis.
One of the first and second rolling bearing assembly is configured to transmit radial loads exerted on the rotor shaft, radially to the main axis, to the housing, and the other of the first and second rolling bearing assembly is configured to transmit radial loads exerted on the rotor shaft, radially to the main axis, to the housing and is configured to transmit axial loads exerted on the rotor shaft, along the main axis, to the housing.

The first aspect of the disclosure may seek to increase the axial compactness of the electric motor, because the axial loads exerted on the gear being transmitted to the rotor shaft allows reducing the number of needed bearing assemblies. The first aspect of the disclosure may also seek to facilitate assembly and maintenance of the electric motor, by allowing simple replacement of the gear, as the output shaft is only mounted with the rotor shaft by interference fit, and not mounted with the housing. A technical benefit may include improving the axial compactness of the electric motor and facilitating its assembly and maintenance.

Optionally in some examples, the second rolling bearing assembly is further configured to transmit radial loads exerted on the output shaft, radially to the main axis, to the housing. A technical benefit may include reducing the number of needed bearing assemblies to support the output shaft.

Optionally in some examples, the first rolling bearing assembly is configured to transmit radial loads exerted on the rotor shaft, radially to the main axis, to the housing and to transmit axial loads exerted on the rotor shaft, along the main axis, to the housing, and the second rolling bearing assembly is configured to transmit radial loads exerted on the rotor shaft, radially to the main axis, to the housing. A technical benefit may include improving the bearing of the forces applied to the output and rotor shafts.

Optionally in some examples, the second rolling bearing assembly is located at the output shaft, along the main axis. A technical benefit may include improving the efficiency of the second rolling bearing assembly to bear radial loads exerting on the output shaft.

Optionally in some examples, the second rolling bearing assembly is located at a distal end of the second lateral portion of the rotor shaft, opposite to the stator, along the main axis. A technical benefit may include improving the position of the second rolling bearing assembly to better bear radial loads exerting on the rotor shaft.

Optionally in some examples, the second rolling bearing assembly comprises a cylindrical roller bearing. A technical benefit may include efficiently bearing radial loads exerted on the second lateral portion of the rotor shaft.

Optionally in some examples, the first rolling bearing assembly comprises a cylindrical roller bearing and a four-point contact ball bearing. A technical benefit may include efficiently bearing axial and radial loads exerted on the first lateral portion of the rotor shaft.

Optionally in some examples, the output shaft is not mounted with the housing by bearings. A technical benefit may include improving the axial compactness of the electric motor.

Optionally in some examples, the gear is cantilevered from the outer end of the output shaft, along the main axis. A technical benefit may include improving the axial compactness of the electric motor.

Optionally in some examples, the electric motor further comprises a third rolling bearing assembly; the output shaft is mounted with the housing via the third rolling bearing assembly; the third rolling bearing assembly is configured to transmit radial loads exerted on the output shaft, radially to the main axis, to the housing; and the gear is located between the second rolling bearing assembly and the third rolling bearing assembly, along the main axis. A technical benefit may include improving the stability of the output shaft, as radial load exerted on the output shaft are better transmitted to the housing thanks to the third rolling bearing assembly.

Optionally in some examples, a length of the interference fit between the output shaft and the rotor shaft, measured along the main axis, is comprised between 20 mm and 200 mm, preferably between 50 mm and 150 mm. A technical benefit may include ensuring the interference fit between the output shaft and the rotor shaft is sufficient to efficiently transmit axial loads exerted on the output shaft to the motor shaft.

Optionally in some examples, a length of the interference fit between the output shaft and the rotor shaft, measured along the main axis, is greater than the diameter of the output shaft. A technical benefit may include ensuring the interference fit between the output shaft and the rotor shaft is sufficient to efficiently transmit axial loads exerted on the output shaft to the motor shaft.

Optionally in some examples, a diameter of the gear is lower than an inner diameter of rolling elements of the second rolling bearing assembly. A technical benefit may include facilitating the assembly of the electric motor as the rotor shaft can be inserted from the first side of the stator with the output shaft already fixedly secured to the rotor shaft.

Optionally in some examples, the output shaft comprises a central tapped hole, extending along the main axis and located at the outer end of the output shaft, along the main axis. A technical benefit may include facilitating removal of the output shaft from the rotor shaft.

Optionally in some examples, the rotor shaft comprises a central tapped hole, extending along the main axis and facing the inner end of the output shaft, along the main axis. A technical benefit may include facilitating assembly of the output shaft with the rotor shaft.

Optionally in some examples, a diameter of the gear is lower than a diameter of the rotor shaft.

According to a second aspect of the disclosure, a drive unit, for an electric vehicle, the drive unit comprises the electric motor described here above; at least one drive shaft, configured to drive at least one wheel of the electric vehicle; and a transmission, connected to the electric motor and to the at least one drive shaft so as to be driven by the electric motor and so as to drive the at least one drive shaft.

Optionally in some example, the drive unit further comprises two drive shafts, each configured to drive a drive wheel of the electric vehicle, and a differential, coaxially mounted with the two drive shafts, connected to the transmission and to the two drive shafts and configured to drive the two drive shafts.

According to a third aspect of the disclosure, an electric vehicle comprises at least one drive wheel and the drive unit described here above, the at least one drive wheel being driven by the drive unit.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary electric vehicle comprising a drive unit according to an example and an electric motor according to another example.
**FIG. 2** is a sectional view of the electric motor of Figure 1.
**FIG. 3** is a sectional view similar to Figure 2, in which an output shaft of the electric motor is shown disassembled.

### DETAILED DESCRIPTION

The detailed description set forth below provides information and examples of the disclosed technology with sufficient detail to enable those skilled in the art to practice the disclosure.

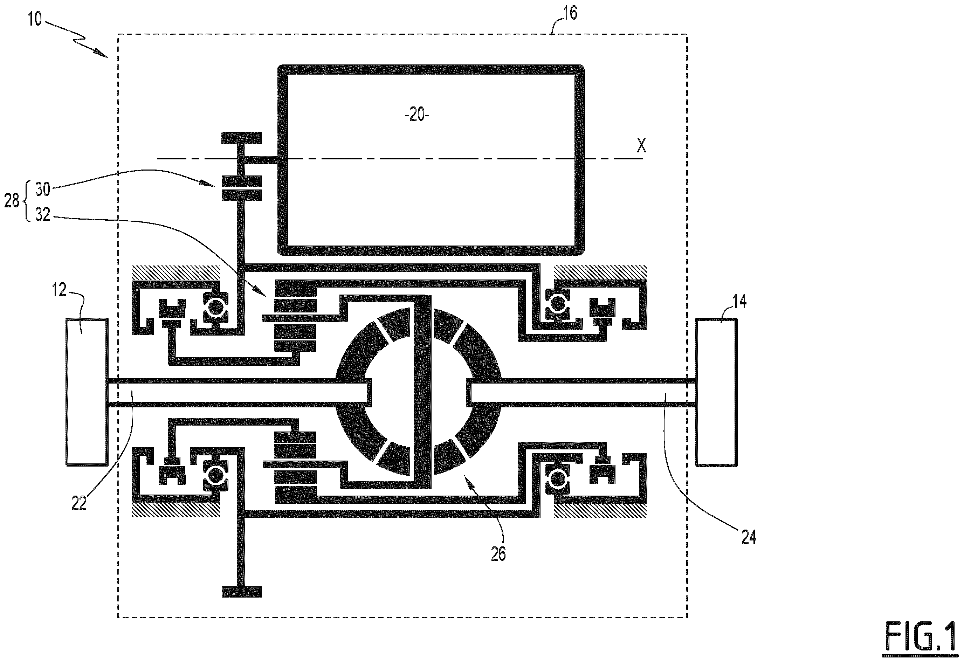

An electric vehicle 10 according to a first example is shown in Figure 1. The electric vehicle 10 is, for example, a heavy-duty vehicle, such as a truck, a bus or a construction equipment, or another type of vehicle, such as an automobile.

In the example, the electric vehicle 10 comprises a left wheel 12, a right wheel 14, which are drive wheels, and a drive unit 16 for driving the left wheel and the right wheel. The drive unit 16 is designed to be fitted on a chassis, not shown, of the electric vehicle 10. For example, the wheel drive unit 16 is designed to be fastened to a suspension system of the electric vehicle 10, which, itself, is fastened to the chassis.

In the example, the drive unit 16 comprises an electric motor 20, a left drive shaft 22, a right drive shaft 24, a differential 26 and a transmission 28. The electric motor 20 is connected to the transmission 28, to drive the transmission, which in turn is connected to the differential 26, to drive the differential. The differential is connected to the left and right drive shafts 22, 24 and distribute torque provided by the electric motor to the left and right drive shafts. The left and right drive shafts 22, 24 are respectively connected to the left and right wheels 12, 14 of the vehicle 10, so that the left and right wheels are driven by the drive unit 16 via the left and right drive shafts.

In the example, the transmission 28 comprises a gear train 30 and a planetary gear train 32, engaging with each other. The planetary gear train acts as a gearbox, thus providing multiple reduction ratio to the transmission. Other transmission can be used in the drive unit 16, the transmission 28 being shown as an example only.

In the example, the planetary gear train 32 and the differential 26 are arranged coaxially with the left and right drive shafts 22, 24. More precisely, the planetary gear train 32 is coaxially mounted around the left drive shaft 22 and the differential 26 is coaxially mounted around the left and right drive shafts 22, 24.

As an alternative, not shown, the drive unit comprises only one drive shaft, does not comprise a differential and is configured to drive only one on the left and right wheels 12, 14 of the electric vehicle 10. Preferably, in such an alternative, the electric vehicle comprises two such drive units, each drive unit driving one of the left and right wheels 12, 14.

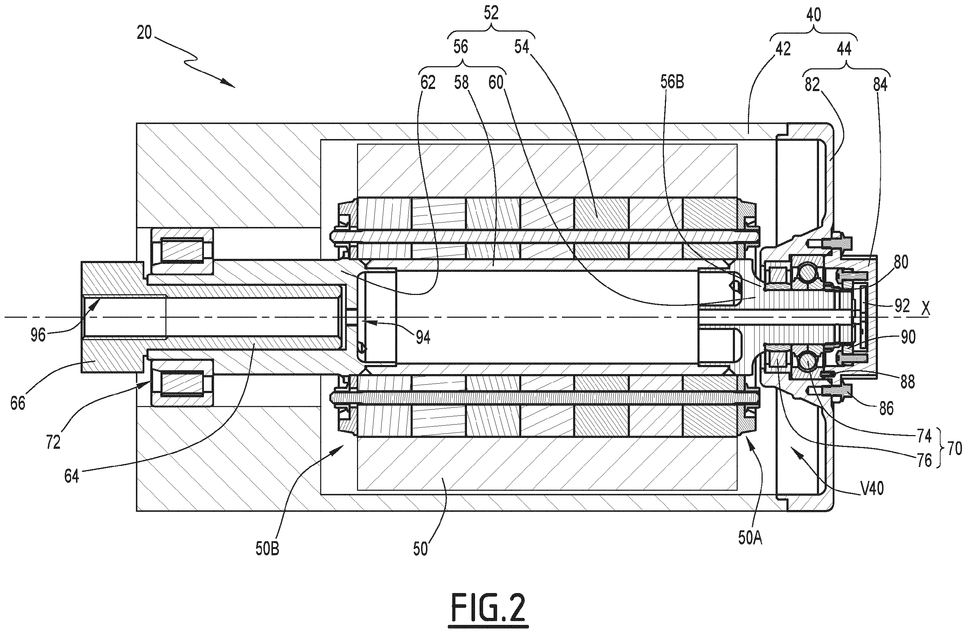

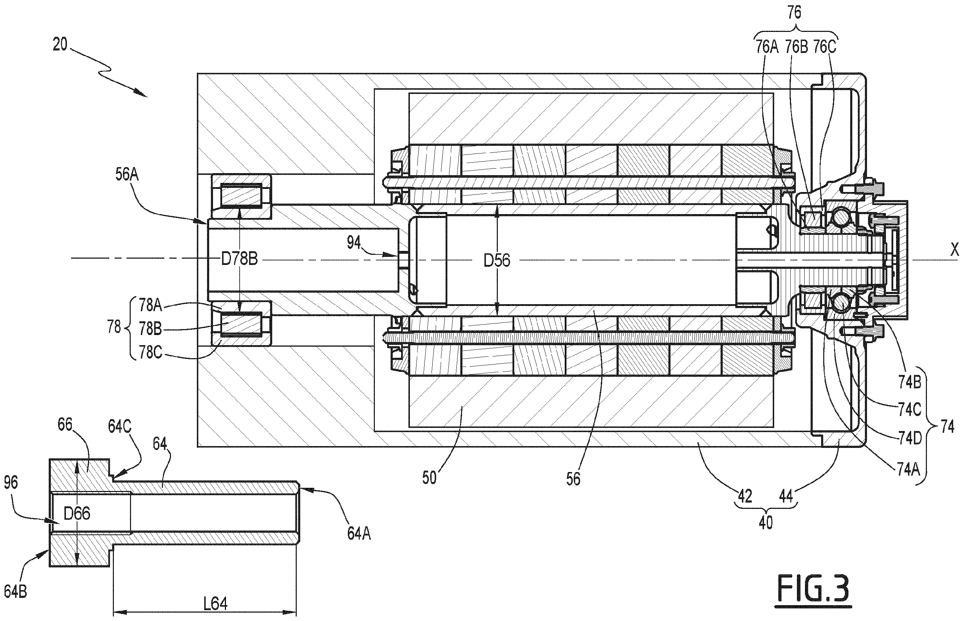

The electric motor 20 is shown with more details in Figures 2 and 3.

The electric motor 20 comprises a housing 40, extending along a main axis X and defining an internal volume V40. The housing 40 comprises a main part 42 and a side cover 44. In the example, the side cover 44 is distinct from the main part 42 and fixed, i.e. fixedly secured, to the main part.

In the example, the main part 42 of the housing 40 is cylindrical. As an alternative, not shown, the housing 40 has another shape but the internal volume V40 has a cylindrical shape. For example, the housing 40 is shared with other components of the drive unit 16, or is a housing of the drive unit.

The electric motor 20 comprises a stator 50, which is only represented schematically. In the example, the stator 50 comprises electromagnets, not shown. The stator 50 is mounted inside of the main part 42 of the housing 40, i.e. within the internal volume V40 of the housing, and extends along the main axis X. The stator 50 defines a first side 50A and a second side 50B, located on opposite ends of the stator, i.e. on opposite ends of the internal volume V40, along the main axis X.

The electric motor 20 comprises a rotor 52, mounted inside of the main part 42 of the housing 40, coaxially mounted inside of the stator 50 and extending along the main axis X. The rotor 52 comprises a magnetic assembly 54 and a rotor shaft 56. The magnetic assembly 54 is arranged around the rotor shaft 56 and surrounded by the stator 50 and is, in the example, a set of permanent magnets.

The rotor shaft 56 comprises a central portion 58, aligned with the stator 50 along the main axis, a first lateral portion 60, offset from the stator 50 along the main axis X and located on the first side 50A of the stator, and a second lateral portion 62, offset from the stator 50 along the main axis X and located on the second side 50B of the stator.

The first and second lateral portions 60, 62 are fixedly secured to the central portion 58, in the example by welding. Other fixation means can be considered, for example an assembly by interference fit. Alternatively, the central portion 58 and the first and second lateral portions 60, 62 are integral, i.e. formed from a single piece.

The electric motor 20 comprises an output shaft 64, extending along the main axis X. The output shaft 64 is distinct from the rotor shaft 56 and fixedly secured to the rotor shaft, more precisely to its first lateral portion 60. The output shaft 64 is fixedly secured to the rotor shaft 56 by interference fit. Hence, the output shaft 64 is coaxially mounted inside the rotor shaft 56.

Preferably, said interference fit between the output shaft 64 and the rotor shaft 56 has a length L64, measured along the main axis X, comprised between 20 mm and 200 mm, more preferably between 50 mm and 150 mm. Hence, the interference fit is long enough to ensure good assembly between the rotor shaft 56 and the output shaft 64.

Preferably, the length L64 of the interference fit between the output shaft 64 and the rotor shaft 56 is greater than a diameter D66 of the output shaft 66, measured radially to the main axis X. Hence, the interference fit is long enough to ensure good assembly between the rotor shaft 56 and the output shaft 64.

In the example, the output shaft 64 is fixedly secured to the rotor shaft 56 only by interference fit. As an alternative, not shown, the output shaft 64 is also fixedly secured to the rotor shaft 56 with splines, in addition to the interference fit. As an alternative, not shown, the output shaft 64 and/or the rotor shaft 56 are knurled on all, or part, of the length L64 of the interference fit.

The output shaft 64 has an inner end 64A, mounted inside the rotor shaft 56, and an outer end 64B, projecting outside of the rotor shaft.

The electric motor 20 comprises a gear 66, integral with the output shaft 64, i.e. the gear and the output shaft are formed from a single piece. The gear 66 is located at the outer end 64B of the output shaft 64.

In the example, the gear 66 is cantilevered from the outer end 64B of the output shaft 64, along the main axis X.

The gear 66 engages with the gear train 30 so as to drive the transmission 28 when the electric motor 20 is powered. In the example, the gear 66 is also an input gear of the gear train 30.

In a known manner, when the electric motor 20 is powered, the output shaft 64 is driven in rotation around the main axis X by the rotor shaft 56, so that the gear 66 drives the transmission 30. In addition, the electric motor 20 can also operates as an electric generator if the rotation of the output shaft 64 and of the rotor shaft 56 is forced by the transmission 28, for example during regenerative braking.

The electric motor 20 is configured so that axial loads exerted on the gear 66, along the main axis X, are transmitted to the rotor shaft 56 via the output shaft 64. In other words, the electric motor 20 does not comprise any component to transmit axial loads exerted on the gear 66 and on the output shaft 64 directly to the housing 40. In particular, the output shaft 64 is not mounted with the housing with rolling bearings capable to bear axial loads. In the example, the output shaft 64 is not mounted with the housing 40 with bearings, i.e. the output shaft 64 is only mounted with the rotor shaft 56.

Practically speaking, axial loads exerted on the gear 66 and on the output shaft 64 - with which the gear is integral - are transmitted to the rotor shaft 56 via the interference fit between the rotor shaft and the output shaft. In addition, in the example, axial loads exerted on the gear 66 in a direction from the second side 50B of the stator 50 towards the first side 50A of the stator, along the main axis, are further transmitted to the rotor shaft 56 via a shoulder 64C of the output shaft 64, which is in abutment against the rotor shaft 56.

The electric motor 20 comprises a first rolling bearing assembly 70, which is located on the first side 50A of the stator 50, along the main axis X. On the first side 50A of the stator 50, the rotor shaft 56 is mounted with the housing 40 via the first rolling bearing assembly 70. More precisely, the first lateral portion 60 of the rotor shaft 56 is mounted with the side cover 44 of the housing 40 via the first rolling bearing assembly 70.

The first rolling bearing assembly 70 is configured to transmit axial loads exerted on the rotor shaft 56, along the main axis X, to the side cover 44 of the housing 40 and thus to the main part 42 of the housing, as the side cover is fixedly secured to the main part. Said axial and radial loads are exerted on the rotor shaft 56 by the gear 66 and are for example exerted on the gear by the transmission 28. Hence, axial loads exerted on the gear 66 are transmitted to the housing 40 via the rotor shaft 56 and via the first rolling bearing assembly 70.

The first rolling bearing assembly 70 is further configured to transmit radial loads exerted on the rotor shaft 56, radially to the main axis X, to the main part 42 of the housing 40 via the side cover 44. Hence, the first rolling bearing assembly 70 bears both axial and radial loads.

The electric motor 20 comprises a second rolling bearing assembly 72, which is located on the second side 50B of the stator 50, along the main axis X. On the second side 50B of the housing 40, the rotor shaft 56 is mounted with the housing 40 via the second rolling bearing assembly 72. More precisely, the second lateral portion 62 of the rotor shaft 56 is mounted with the main part 42 of the housing 40 via the second rolling bearing assembly 72.

The second rolling bearing assembly 72 is configured to transmit radial loads exerted on the rotor shaft 56, radially to the main axis X, to the main part 42 of the housing 40. In the example, the second rolling bearing assembly 72 bears only radial loads.

Preferably, the second rolling bearing assembly 72 is located at a distal end 56A of the rotor shaft 56, more precisely at a distal end 56A of the second lateral portion 60, opposite to the stator 50, along the main axis X.

In the example, the second rolling bearing assembly 72 is also configured to transmit radial loads exerted on the output shaft 64, radially to the main axis X, to the housing 40. To this end, the second rolling bearing assembly 72 is located at the output shaft 64, along the main axis X, i.e. the second rolling bearing assembly 72 is aligned with the output shaft 64, along the main axis.

Preferably, the first rolling bearing assembly 70 comprises a four-point contact ball bearing 74, to bear axial loads, and a cylindrical roller bearing 76, to bear radial loads. In addition, preferably, the second rolling bearing assembly 72 comprises only a cylindrical roller bearing 78, to bear radial loads.

In a known manner, the four-point contact ball bearing 74 comprises two inner rings 74A and 74B, rolling elements 74C and an outer ring 74D; the cylindrical roller bearing 76 comprises an inner ring 76A, rolling elements 76B and an outer ring 76C; and the cylindrical roller bearing 78 comprises an inner ring 78A, rolling elements 78B and an outer ring 78C.

As an alternative, not shown, the first rolling bearing assembly 70 comprises only a ball bearing, to bear radial and axial loads.

As an alternative, not shown, the first rolling bearing assembly 70 and the second rolling bearing assembly 72 each comprise only a tapered roller bearing, in a "X" or in a "O" arrangement, to bear radial and axial loads. In such an alternative, both the first and second rolling bearing assemblies 70, 72 bear axial loads: one of the rolling bearing assemblies transmit axial loads applied to the rotor shaft 56 in a first direction along the main axis and the other of the rolling bearing assemblies transmit axial loads applied to the rotor shaft in the other direction along the main axis.

Preferably, the electric motor 20 comprises an axial stop 80, which is fixedly secured to the rotor shaft 56, more precisely to its first lateral portion 60, so that inner rings 74A, 74B of the four-point contact ball bearing 74 and the inner ring 76A of the cylindrical roller bearing 76 are axially secured, along the main axis X, between a shoulder 56B of the rotor shaft 56 and the axial stop 80. Thanks to the axial stop 80, axial movement of the inner rings of the first rolling bearing assembly 70 are stopped and axial loads exerted on the rotor shaft 56 are efficiently transmitted to the first rolling bearing assembly 70, more precisely to the rolling elements 74C of the four-point contact ball bearing 74, and then to the housing 40.

In the example, the axial stop 80 is a nut, screwed onto the first lateral portion 60 of the rotor shaft 56.

In the assembled configuration of the electric motor 20, the side cover 44 is fixed securely to the main part 42 so as to close the housing 40, is crossed by the main axis X and is located on the first side 50A of the stator 50. Furthermore, the side cover 44 abuts against the first rolling bearing assembly 70, along the main axis X, so that axial loads exerted on the rotor shaft 56 are transmitted to the main part of the housing by the side cover.

In the example, the side cover 44 comprises a peripheral part 82 and a center part 84.

In the assembled configuration of the electric motor 20, the peripheral part 82 is fixedly secured to the main part 42, in the example by screws 86. In addition, the first lateral portion 60 of the rotor shaft 56 extends through the peripheral part 82 and the center part 84 is crossed by the main axis X and fixedly secured to the peripheral part 82. Furthermore, the first rolling bearing assembly 70 is mounted between the first lateral portion 62 of the rotor shaft 56 and the peripheral part 82 of the side cover 44. Moreover, the outer rings 74D and 76C of the four-point contact ball bearing 74 and of the cylindrical roller bearing 76 of the first rolling bearing assembly 70 are axially secured, along the main axis X, between the peripheral part 82 and the center part 84. In other words, as visible of Figure 3, the outer rings 74D and 76C are axially secured, along the main axis X, between the peripheral part 82 and the center part 84.

Preferably, the center part 84 of the side cover 44 comprises an anti-rotation pin 88, allowing for proper installation of the four-point contact ball bearing 74: in the assembled configuration of the electric motor 20, the four-point contact ball bearing is mounted between the rotor shaft 56 and the peripheral part 82 with radial clearance with the peripheral part. In other words, a radial clearance, not visible in the Figures, is present between the outer ring 74D and the peripheral part 82. Furthermore, the anti-rotation pin 88 of the center part 84 is in abutment against the outer ring 74D of the four-point contact ball bearing 74, so as to prevent rotation of the outer ring 74D around the main axis X relative to the center part 84 and relative to the housing 40. Hence, the assembly of the four-point contact ball bearing 74, and therefore of the first rolling bearing assembly 70, is in accordance with general specifications.

Preferably, the electric motor 20 comprises grounding electric contacts 90, which are fixedly secured to the center part 84 of the side cover 44 and which are configured to ground the rotor 52. In the example, the grounding electric contacts 90 are carbon brushes, facing an extremity of the rotor shaft 56, more precisely of the first lateral portion 60 of the rotor shaft, and contacting said extremity, so that any electrical charges carried by the rotor 52 can be conducted towards the housing 40 via the carbon brushes 90. Integrating grounding electric contacts 90 in the center part 84 of the side cover 44 is useful to avoid passage of electrical current through the first and second rolling bearing assemblies 70, 72, which is to avoid for improving durability of the bearing assemblies.

Preferably, the electric motor 20 comprises a resolver 92, or a rotary encoder 92 crossed by the main axis X. In the example, the resolver 92 is fixedly secured to the center part 84 of the side cover 44 and is facing the extremity of the rotor shaft 56 in the assembled configuration of the electric motor 20. In a known manner, the resolver is configured to detect rotation of the rotor shaft 56 around the main axis X. The resolver 92 is useful, for example, to detect the angular position of the rotor shaft 56 around the main axis X and to calculate the rotational speed of the rotor shaft around the main axis X.

The side cover 44 of the housing 40 thus incorporates four independent functions: the side cover 44 acts as an axial stop for the first rolling bearing assembly 70, it integrates the anti-rotation pin 88 to prevent rotation of the outer ring 74D, it integrates the grounding electric contacts 90 to ground the rotor shaft 56 and it integrates the resolver 92. Thus, the compactness of the electric motor 20 is optimized.

In addition to these four functions, the side cover 44 also allows, when removed, i.e. when not secured to the main part 42, to open the housing 40 so as to allow insertion of the rotor 52 into the stator 50, via the first side 50A of the stator. Having the side cover closing the housing 40 in addition to these four functions improves the compactness of the electric motor 20 and facilitates its assembly and its maintenance.

To assemble the electric motor 20, the main part 42 of the housing 40 and the stator 50 are assembled, by mounting the stator inside of the main part of the housing, i.e. within the internal volume V40; and the rotor 52, the side cover 44 and the first rolling bearing assembly 70 are assembled together, by mounting the rotor shaft 56 with the side cover 44 via the first rolling bearing assembly 70.

Then, once the main part 42 and the stator 50 are assembled together and once the rotor 52, the side cover 44 and the first rolling bearing assembly 70 are assembled together, the rotor 52 is assembled with the stator 50, by coaxially mounting the rotor inside of the stator. To this end, the assembly formed by the rotor 52, the side cover 44 and the first rolling bearing assembly 70 is moved as a whole. Then, the assembly is finished by fixedly securing the side cover 44 to the main part 42, so as to fixedly close the housing 40. In the example, the peripheral part 82 is fixedly secured to the main part 42, with fixation means, not shown. Preferably, the peripheral part 82 is fixedly secured to the main part 42 using screws, not shown.

Preferably, the output shaft 64 is fixedly secured to the rotor shaft 56 by interference fit prior to the insertion of the rotor 52 inside of the stator 50. To this end, the diameter D66 of the gear 66 is lower than an internal diameter D78B of the rolling elements 78B of the cylindrical roller bearing 78 of the second rolling bearing assembly 72. In addition, prior to the insertion of the rotor 52 inside of the stator 50, the inner ring 78A of the cylindrical roller bearing 78 is mounted onto the rotor shaft 56 and the outer ring 78C and the rolling elements 78B of the cylindrical roller bearing 78 are mounted onto the housing 40. Hence, the gear 66 can pass through the outer ring 78C during insertion of the rotor 52 inside of the stator 50, and once the rotor 52 is inserted inside of the stator 50, the cylindrical roller bearing 78 is assembled. Furthermore, the diameter D66 of the gear 66 is lower than a diameter D52 of the rotor, corresponding to an internal diameter of the stator 50, so that the gear 66 can pass through the stator 50 during insertion of the rotor inside of the stator. Preferably, the diameter D66 of the gear 66 is also lower than a diameter D56 of the rotor shaft 56.

The assembly of the electric motor 20 is facilitated by the side cover 44 because the side cover is used to simultaneously closes the housing 40 and provide the four functions discussed here above. Hence, there is no need to install components dedicated to act as an axial stop for the first rolling bearing assembly, to act as an anti-rotation for the four-point contact ball bearing, to carry the resolver 92 or to carry the grounding electric contacts 90, because all these functions are performed by the side cover 44, thus reducing the number of operation required to assemble the electric motor 20.

Once the electric motor 20 is assembled, the output shaft 64 is easy to disassemble from, and reassemble with, the rotor shaft 56. Indeed, due to the output shaft 64 being fixedly secured to the rotor shaft 56 by interference fit and due to the output shaft 64 not being directly mounted with the housing via bearing, the output shaft 64 can be disassembled by exerting an axial force on the output shaft 64 or on the gear 66, oriented along the main axis from the first side 50A towards the second side 50B of the stator, sufficient to overcome the interference fit.

Hence, the electric motor 20 is easily maintained. For example, if the gear 66 is to be replaced because of wear and tear of its teeth or because of other damages, the output shaft 64 can simply be removed from the electric motor 20 and be replaced by a new output shaft, without having to disassemble the rotor shaft 56 and without having to interact with the first and second rolling bearing assemblies 70, 72.

In the example, the rotor shaft 56 comprises a central tapped hole 94, extending along the main axis X and facing the inner end 64A of the output shaft 64 in the assembled configuration of the electric motor 20. The central tapped hole 94 of the rotor shaft 56 facilitates the assembly of the output shaft 64 with the rotor shaft: an assembly tool, not shown, can be threaded in the central tapped hole 94 to provide a support point fixed relative to the rotor shaft, allowing the output shaft 64 to be pressed into the rotor shaft 56 without moving the rotor shaft along the main axis X, therefore without affecting the first and second rolling bearing assemblies 70, 72.

In the example, the output shaft 64 comprises a central tapped hole 96, extending along the main axis X and located at the outer end 64B of the output shaft in the assembled configuration of the electric motor 20. The central tapped hole 96 of the output shaft 64 facilitates the removal of the output shaft 64 from the rotor shaft: a first part of a removal tool, not shown, can be threaded in the central tapped hole 96 to provide a support point fixed relative to the output shaft, while a second part of the removal tool extends inside of the output shaft 64 so as to be in contact with the rotor shaft 56. Then, the output shaft 64 is extracted from the rotor shaft 56 by keeping the second part immobile, along the main axis X, while moving the first part away from the rotor shaft. Hence, the output shaft 64 is extracted without moving the rotor shaft along the main axis X, therefore without affecting the first and second rolling bearing assemblies 70, 72.

The central tapped holes 94, 96 thus allow easy and safe assembly and removal of the output shaft 64 with the rotor shaft 56, facilitating maintenance of the electric motor 20.

Moreover, having the gear 66 cantilevered and the output shaft 64 only mounted with the rotor shaft 56 improves the axial compactness of the electric motor 20, compared with a configuration in which the output shaft 64 would also be mounted with the housing 40 via bearings.

As an alternative, not shown, the output shaft 64 extends of the first side 50A of the stator 50, instead on of the second side 50B of the stator. Hence, the output shaft 64 extends through the side cover 44, more precisely through the center part 84. In such an alternative, the gear 66 is therefore located on the first side 50A of the stator 50. In such as alternative, the gear 66 and the side cover 44 operates as described here above, except that the center part 84 cannot carry a resolver because it is traversed by the output shaft 64.

As an alternative, not shown, electric motor 20 comprises two output shaft, each output shaft extending on one of the sides 50A, 50B of the stator and carrying a gear. In other words, the electric motor 20 comprises two gears, each engaging with the transmission 82 of the drive unit 16.

As an alternative, not shown, the first rolling bearing assembly 70 is configured to transmit only radial loads exerted on the rotor shaft 56 to the housing 40 and the second rolling bearing assembly 72 is configured to transmit both radial loads and axial loads exerted on the rotor shaft to the housing. In other words, in such an alternative, the functions of the first and second bearing assemblies 70, 72 are inversed. Preferably, in such an alternative, the first rolling bearing assembly comprises only a cylindrical roller bearing and the second rolling bearing assembly comprises a cylindrical roller bearing and a four-point contact ball bearing, or only a ball bearing.

As an alternative, not shown, the electric motor 20 further comprises a third rolling bearing assembly, with which the output shaft 56 is mounted with the housing 40. The third rolling bearing assembly is configured to transmit only radial loads exerted on the output shaft, radially to the main axis X, to the housing, and not to transmit axial loads exerted on the output shaft to the housing. The third rolling bearing assembly allows for better bearing of the radial loads exerted on the output shaft 56, thus increasing durability of the output shaft 56 and of electric motor 20. Furthermore, radial loads applied to the first and second rolling bearing assemblies 70, 72 are reduced, increasing their lifespan. Preferably, in such an alternative, the gear 66 is located between the second rolling bearing assembly 72 and the third rolling bearing assembly, along the main axis, so that the gear 66 is not cantilevered.

As an alternative, not shown, the drive unit 16 comprises more than one electric motor 20 as described here above, for example two electric motors 20, each electric motor providing motor torque to the transmission 28.

Example 1: an electric motor, for an electric vehicle, the electric motor comprising:
- a housing,
- a stator, mounted inside of the housing and extending along a main axis,
- a rotor comprising a rotor shaft, the rotor being mounted inside of the housing and coaxially mounted inside of the stator, the rotor shaft comprising:
   ∘ a central portion, aligned with the stator along the main axis,
   ∘ a first lateral portion, offset from the stator along the main axis and located on a first side of the stator, along the main axis, and
   ∘ a second lateral portion, offset from the stator along the main axis and located on a second side of the stator opposed to the first side, along the main axis,
- an output shaft, coaxially mounted inside the rotor shaft, the output shaft having an inner end and an outer end, the output shaft being fixed with the second lateral portion of the rotor shaft by interference fit of the inner end with the rotor shaft, the output shaft being configured to be driven in rotation around the main axis by the rotor shaft when the electric motor is powered,
- a gear, integral with the output shaft, the electric motor being configured so that axial loads exerted on the gear, along the main axis, are transmitted to the rotor shaft via the output shaft,
- a first rolling bearing assembly, the first lateral portion of the rotor shaft being mounted with the housing via the first rolling bearing assembly, the first rolling bearing assembly being located on the first side of the stator, along the main axis, and
- a second rolling bearing assembly, the second lateral portion of the rotor shaft being mounted with the housing via the second rolling bearing assembly, the second rolling bearing assembly being located on the second side of the stator, along the main axis,

wherein one of the first and second rolling bearing assembly is configured to transmit radial loads exerted on the rotor shaft, radially to the main axis, to the housing, and
wherein the other of the first and second rolling bearing assembly is configured to transmit radial loads exerted on the rotor shaft, radially to the main axis, to the housing and is configured to transmit axial loads exerted on the rotor shaft, along the main axis, to the housing.

Example 2: the electric motor of example 1, wherein the second rolling bearing assembly is further configured to transmit radial loads exerted on the output shaft, radially to the main axis, to the housing.

Example 3: the electric motor of any one of examples 1-2, wherein:
- the first rolling bearing assembly is configured to transmit radial loads exerted on the rotor shaft, radially to the main axis, to the housing and to transmit axial loads exerted on the rotor shaft, along the main axis, to the housing, and
- the second rolling bearing assembly is configured to transmit radial loads exerted on the rotor shaft, radially to the main axis, to the housing.

Example 4: the electric motor of any one of examples 1-3, wherein the second rolling bearing assembly is located at the output shaft, along the main axis.

Example 5: the electric motor of any one of examples 1-4, wherein the second rolling bearing assembly is located at a distal end of the second lateral portion of the rotor shaft, opposite to the stator, along the main axis.

Example 6: the electric motor of any one of examples 1-5, wherein the second rolling bearing assembly comprises a cylindrical roller bearing.

Example 7: the electric motor of any one of examples 1-6, wherein the first rolling bearing assembly comprises a cylindrical roller bearing and a four-point contact ball bearing.

Example 8: the electric motor of any one of examples 1-7, wherein the output shaft is not mounted with the housing by bearings.

Example 9: the electric motor of any one of examples 1-8, wherein the gear is cantilevered from the outer end of the output shaft, along the main axis.

Example 10: the electric motor of any one of examples 1-7, further comprising a third rolling bearing assembly, wherein:
- the output shaft is mounted with the housing via the third rolling bearing assembly,
- the third rolling bearing assembly is configured to transmit radial loads exerted on the output shaft, radially to the main axis, to the housing, and
- the gear is located between the second rolling bearing assembly and the third rolling bearing assembly, along the main axis.

Example 11: the electric motor of any one of examples 1-10, wherein a length of the interference fit between the output shaft and the rotor shaft, measured along the main axis, is comprised between 20 mm and 200 mm, preferably between 50 mm and 150 mm.

Example 12: the electric motor of any one of examples 1-11, wherein a length of the interference fit between the output shaft and the rotor shaft, measured along the main axis, is greater than the diameter of the output shaft.

Example 13: the electric motor of any one of examples 1-12, wherein a diameter of the gear is lower than an inner diameter of rolling elements of the second rolling bearing assembly.

Example 14: the electric motor of any one of examples 1-13, wherein the output shaft comprises a central tapped hole, extending along the main axis and located at the outer end of the output shaft, along the main axis.

Example 15: the electric motor of any one of examples 1-14, wherein the rotor shaft comprises a central tapped hole, extending along the main axis and facing the inner end of the output shaft, along the main axis.

Example 16: the electric motor of any one of examples 1-15, wherein a diameter of the gear is lower than a diameter of the rotor shaft.

Example 17: a drive unit, for an electric vehicle, the drive unit comprising:
- the electric motor of any one of examples 1-16,
- at least one drive shaft, configured to drive at least one wheel of the electric vehicle, and
- a transmission, connected to the electric motor and to the at least one drive shaft so as to be driven by the electric motor and so as to drive the at least one drive shaft.

Example 18: the drive unit of example 17, further comprising two drive shafts, each configured to drive a drive wheel of the electric vehicle, and a differential, coaxially mounted with the two drive shafts, connected to the transmission and to the two drive shafts and configured to drive the two drive shafts.

Example 19: an electric vehicle, comprising at least one drive wheel and the drive unit of any one of examples 17-18, wherein the at least one drive wheel is driven by the drive unit.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric motor (20), for an electric vehicle (10), the electric motor (20) comprising:
- a housing (40),
- a stator (50), mounted inside of the housing (40) and extending along a main axis (X),
- a rotor (52) comprising a rotor shaft (56), the rotor (52) being mounted inside of the housing (40) and coaxially mounted inside of the stator (50), the rotor shaft (56) comprising:
∘ a central portion (58), aligned with the stator (50) along the main axis (X),
∘ a first lateral portion (60), offset from the stator (50) along the main axis (X) and located on a first side of the stator (50), along the main axis (X), and
∘ a second lateral portion (62), offset from the stator (50) along the main axis (X) and located on a second side of the stator (50) opposed to the first side, along the main axis (X),
- an output shaft (64), coaxially mounted inside the rotor shaft (56), the output shaft (64) having an inner end (64A) and an outer end (64B), the output shaft (64) being fixedly secured with the second lateral portion (62) of the rotor shaft (56) by interference fit of the inner end (64A) with the rotor shaft (56), the output shaft (64) being configured to be driven in rotation around the main axis (X) by the rotor shaft (56) when the electric motor (20) is powered,
- a gear (66), integral with the output shaft (64), the electric motor (20) being configured so that axial loads exerted on the gear (66), along the main axis (X), are transmitted to the rotor shaft (56) via the output shaft (64),
- a first rolling bearing assembly (70), the first lateral portion (60) of the rotor shaft (56) being mounted with the housing (40) via the first rolling bearing assembly (70), the first rolling bearing assembly (70) being located on the first side of the stator (50), along the main axis (X), and
- a second rolling bearing assembly (72), the second lateral portion (62) of the rotor shaft (56) being mounted with the housing (40) via the second rolling bearing assembly (72), the second rolling bearing assembly (72) being located on the second side of the stator (50), along the main axis (X),
wherein one of the first and second rolling bearing assemblies (70, 72) is configured to transmit radial loads exerted on the rotor shaft (56), radially to the main axis (X), to the housing (40), and
wherein the other of the first and second rolling bearing assemblies (70, 72) is configured to transmit radial loads exerted on the rotor shaft (56), radially to the main axis (X), to the housing (40) and is configured to transmit axial loads exerted on the rotor shaft (56), along the main axis (X), to the housing (40).

2. The electric motor (20) of claim 1, wherein the second rolling bearing assembly (72) is further configured to transmit radial loads exerted on the output shaft (64), radially to the main axis (X), to the housing (40).

3. The electric motor (20) of any one of claims 1-2, wherein:
- the first rolling bearing assembly (70) is configured to transmit radial loads exerted on the rotor shaft (56), radially to the main axis (X), to the housing (40) and to transmit axial loads exerted on the rotor shaft (56), along the main axis (X), to the housing (40), and
- the second rolling bearing assembly (72) is configured to transmit radial loads exerted on the rotor shaft (56), radially to the main axis (X), to the housing (40).

4. The electric motor (20) of any one of claims 1-3, wherein the second rolling bearing assembly (72) is located at the output shaft (64), along the main axis (X).

5. The electric motor (20) of any one of claims 1-4, wherein the second rolling bearing assembly (72) is located at a distal end (56A) of the second lateral portion (62) of the rotor shaft (56), opposite to the stator (50), along the main axis (X).

6. The electric motor (20) of any one of claims 1-5, wherein the second rolling bearing assembly (72) comprises a cylindrical roller bearing (78).

7. The electric motor (20) of any one of claims 1-6, wherein the first rolling bearing assembly (70) comprises a cylindrical roller bearing (76) and a four-point contact ball bearing (74).

8. The electric motor (20) of any one of claims 1-7, wherein the output shaft (64) is not mounted with the housing (40) by bearings.

9. The electric motor (20) of any one of claims 1-8, wherein the gear (66) is cantilevered from the outer end (64B) of the output shaft (64), along the main axis (X).

10. The electric motor (20) of any one of claims 1-7, further comprising a third rolling bearing assembly, wherein:
- the output shaft (64) is mounted with the housing (40) via the third rolling bearing assembly,
- the third rolling bearing assembly is configured to transmit radial loads exerted on the output shaft (64), radially to the main axis (X), to the housing (40), and
- the gear (66) is located between the second rolling bearing assembly (72) and the third rolling bearing assembly, along the main axis (X).

11. The electric motor (20) of any one of claims 1-10, wherein a length (L64) of the interference fit between the output shaft (64) and the rotor shaft (56), measured along the main axis (X), is greater than the diameter of the output shaft (64).

12. The electric motor (20) of any one of claims 1-11, wherein the output shaft (64) comprises a central tapped hole (96), extending along the main axis (X) and located at the outer end (64B) of the output shaft (64), along the main axis (X).

13. The electric motor (20) of any one of claims 1-12, wherein the rotor shaft (56) comprises a central tapped hole (94), extending along the main axis (X) and facing the inner end (64A) of the output shaft (64), along the main axis (X).

14. A drive unit (16), for an electric vehicle (10), the drive unit (16) comprising:
- the electric motor (20) of any one of claims 1-13,
- at least one drive shaft (22, 24), configured to drive at least one wheel (12, 14) of the electric vehicle (10), and
- a transmission (28), connected to the electric motor (20) and to the at least one drive shaft (22, 24) so as to be driven by the electric motor (20) and so as to drive the at least one drive shaft (22, 24).

15. An electric vehicle (10), comprising at least one drive wheel (12, 14) and the drive unit (16) of claim 14, wherein the at least one drive wheel (12, 14) is driven by the drive unit (16).
